# EUROPEAN PATENT APPLICATION

(11) **EP 1 998 474 A1**
(43) Date of publication of application: **03.12.2008**
(21) Application number: 07715270.0
(22) Date of filing: 28.02.2007
(51) Int. Cl.: H04B 7/26, H04Q 7/34

(54) **COMMUNICATION AREA DETECTION SYSTEM, METHOD THEREOF, AND BASE STATION AND MOBILE DEVICE USED FOR THE SAME**

(30) Priority: 15.03.2006 JP 2006070114
(71) Applicant: NEC Corporation, Minato-ku Tokyo 108-8001 (JP)
(72) Inventor: YANAGISAKO, Yoshifumi, Tokyo 108-8001 (JP)
(74) Representative: Vossius & Partner
(86) International application number: PCT/JP2007/054379
(87) International publication number: WO 2007/119314

(57) **Abstract**

In the wake that transmitted power from a base station to user equipment becomes a constant value or more, a control station acquires positional information of the user equipment (position 12), whereby a downstream service stable area-unstable area border 10 is grasped. Further, when transmitted power of the user equipment becomes a constant value or more, positional information of the user equipment (position 11) is acquired, whereby an upstream service stable area-unstable area border 20 is grasped. Thus, in a mobile communication system, determination of each of the downstream and upstream stable-unstable areas can be carried out with accuracy, easily and in real time at detection of a service area in the base station.

## Description

### Technical Field

The present invention relates to a communication area detecting system and a method thereof, and a base station and user equipment using the same, and particularly, the present invention relates to a communication area detection system for acquiring upstream and downstream stable-unstable area borders in a mobile communication system.

### Background Art

In a mobile communication system, it is extremely important in carrying out cell design or cell arrangement to survey which service and in which area communication can be carried out stably by means of a class of service (audio communication service or data communication service) and a communication rate to be used. However, such survey requires a very long time, while a radio wave environment is varied depending on temporal change in ambient condition such as construction of expressways and buildings. Therefore, even though survey is carried out once, it is not always true that the survey results can be used effectively in the future.

Here, referring to Japanese Patent Application Publication No. 2000-156885 (Patent Document 1), in order to grasp a size and position of a wireless zone, an overlapping condition and traffic volume of a plurality of wireless zones in real time and visually, a technique to carry out detection of a wireless zone on the basis of transmitted power of a pilot channel is proposed.

### Disclosure of the Invention

The technique of Patent Document 1 described above is to detect a wireless zone on the basis of transmitted power of a pilot channel. However, stably receivable areas differ from each other with respect to a class of communication service such as an audio communication service and a data communication service or a communication rate used for communication. Therefore, it is not necessarily the case where the outside of an area obtained on the basis of transmitted power of a pilot channel is a blind zone (unstable area).

Further, since a downstream frequency is normally different from an upstream frequency, an upstream blind zone is not determined even when a downstream blind zone is determined on the basis of a pilot channel. Namely, in the technique of Patent Document 1, there is a defect that a stable-unstable area as a cell cannot be determined.

It is an object of the present invention to provide a service area detecting system and a method thereof, and a base station and user equipment using the same in which determination of downstream and upstream stable-unstable areas can be carried out with accuracy, easily and in real time.

A communication area detecting system according to the present invention is a communication area detecting system including: first means for acquiring a downstream stable-unstable area border in accordance with transmitted power from a base station to user equipment; and second means for acquiring an upstream stable-unstable area border in accordance with transmitted power of the user equipment.

Another communication area detecting system according to the present invention is a communication area detecting system, including: first means for acquiring a downstream stable-unstable area border in accordance with received power in user equipment of a channel in which it is transmitted from a base station with constant power; and second means for acquiring an upstream stable-unstable area border in accordance with transmitted power of the user equipment.

A method of detecting a communication area according to the present invention is a method of detecting a communication area, the method including: a first step of acquiring a downstream stable-unstable area border in accordance with transmitted power from a base station to user equipment; and a second step of acquiring an upstream stable-unstable area border in accordance with transmitted power of the user equipment.

Another method of detecting a communication area according to the present invention is a method of detecting a communication area, the method including: a first step of acquiring a downstream stable-unstable area border in accordance with received power in user equipment of a channel in which it is transmitted from a base station with constant power; and a second step of acquiring an upstream stable-unstable area border in accordance with transmitted power of the user equipment.

A base station according to the present invention is a base station in an area detecting system, in which a downstream stable-unstable area border is acquired in accordance with transmitted power from the base station to user equipment, the base station including: means for notifying a wireless control station of that effect when the transmitted power becomes a predetermined value or more or when the transmitted power becomes less than the predetermined value.

User equipment according to the present invention is user equipment in an area detecting system, in which an upstream stable-unstable area border is acquired in accordance with transmitted power of the user equipment, the user equipment including: means for notifying a wireless control station of that effect when the transmitted power becomes a predetermined value or more or when the transmitted power becomes less than the predetermined value.

Another user equipment according to the present invention is user equipment in an area detecting system, in which an upstream stable-unstable area border in a mobile communication system is acquired, the user equipment including: first means for notifying a wireless control station of positional information when received power of a channel in which it is transmitted from a base station with constant power becomes a predetermined value or less; and second means for notifying the wireless control station of that effect when transmitted power to the base station becomes a predetermined value or more or when the transmitted power becomes less than the predetermined value.

According to the present invention, effects as described below are achieved.

A first effect is that it is made possible to acquire stable-unstable area information simply without carrying out conventional area survey because the stable-unstable area information is automatically acquired during a cell operation.

Further, a second effect is that the latest information can be acquired in accordance with an environmental change in a cell (construction of a high-rise building and the like) because this information can always be acquired.

Moreover, a third effect is that more detailed cell information can be acquired because stable-unstable area border information can be acquired together with a class of communication service and communication rate information.

### Brief Description of the Drawing

Fig. 1 is a schematic block diagram of a mobile communication system to which an embodiment of the present invention is applied;
Fig. 2 is a view for explaining a principle of the present invention;
Fig. 3 is a sequence diagram showing an operation for acquiring a downstream stable-unstable area border according to an embodiment of the present invention;
Fig. 4 is a sequence diagram showing an operation for acquiring an upstream stable-unstable area border according to the embodiment of the present invention; and
Fig. 5 is a block diagram showing a schematic configuration of a main part of each of the user equipment, the base station and the control station according to the embodiment of the present invention.

### Best Mode for Carrying Out the Invention

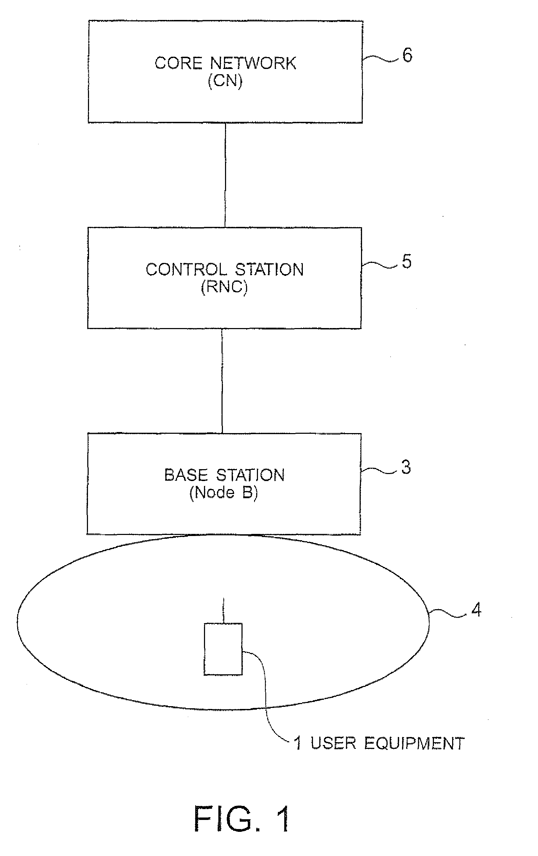

Hereinafter, an embodiment of the present invention will be described with reference to the drawings. Fig. 1 is a schematic system configuration diagram to which the present invention is applied. A base station (Node B) 3 has a service area 4. User equipment (UE) 1 can enjoy various services through the base station 3 when the user equipment exists in the area 4. The base station 3 is connected to a control station (RNC: Radio Network Controller) 5 to be variously controlled. The control station 5 is connected to a core network (CN) 6. In this regard, in the following explanation, although both the number of base station 3 and the number of user equipment 1 are one, there may be a plurality of them in an actual system as is well known.

In the present invention, in the wake that transmitted power against the user equipment 1 of the base station 3 becomes a constant value or more, the control station 5 acquires and stores positional information of the user equipment 1, whereby a downstream service stable-unstable area border is grasped. Further, in the wake that transmitted power of the user equipment 1 becomes a constant value or more, the control station 5 acquires positional information of the user equipment 1, whereby an upstream service stable-unstable area border is grasped. For that purpose, the user equipment 1 has a function to acquire its own positional information (not shown in the drawings particularly), and known one can be used as such a function.

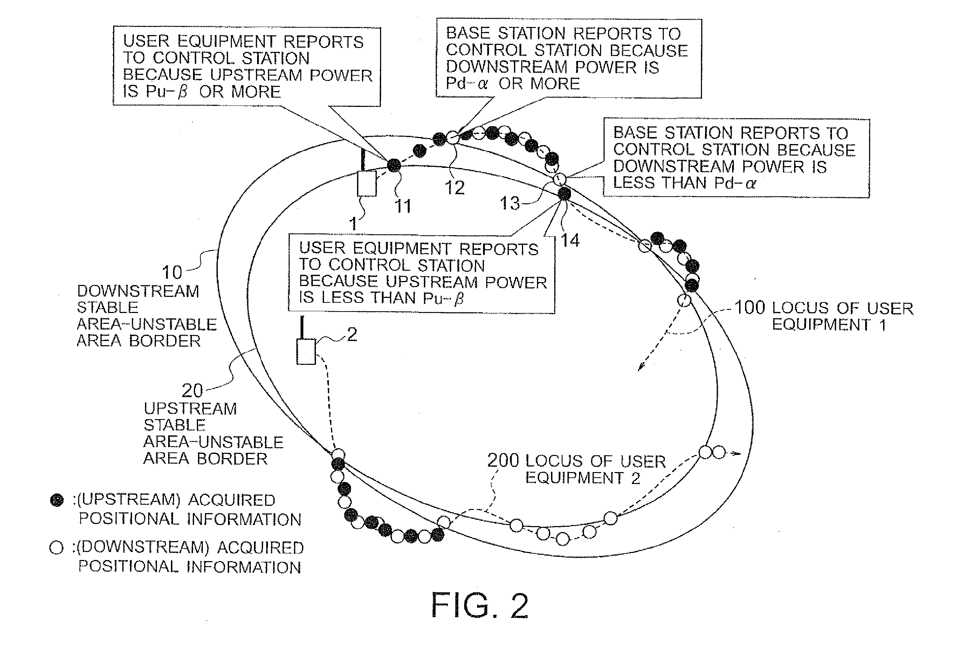

Fig. 2 is a view for explaining a principle to acquire these downstream stable area-unstable area border 10 and upstream stable area-unstable area border 20. In Fig. 2, user equipment 1 and user equipment 2 are respectively moving along loci 100 and 200 as shown with broken lines. Further, a black circle (•) indicates a position (upstream acquisition positional information) at which the base station 3 acquires information from the user equipment 1 in order to obtain an upstream stable area-unstable area border 20. Moreover, a white circle (○) indicates a position (downstream acquisition positional information) at which the base station 3 acquires information from the user equipment 1 in order to obtain a downstream stable area-unstable area border 10.

Detection of the downstream stable-unstable area border 10 will first be described. When the base station 3 starts to use power that is power (Pd-α) or more, which is obtained by subtracting a predetermined margin value from the maximum transmitted power Rd supplied with respect to each class of communication service and each communication rate (position 12), the base station 3 notifies the control station 5 that the transmitted power is near the limit. The control station 5 that received the notification starts acquisition of positional information of the targeted user equipment 1 via the base station 3.

The acquired positional information is temporarily stored in the control station 5 or an information management station (which is included in the core network 6 of Fig. 1, but is not shown in the drawings particularly) together with the used service and rate information. Then, the acquired positional information is subjected to statistical processing to be stored as border information indicating the downstream stable-unstable area 10.

When the transmitted power of the base station 3 becomes less than (Pd-α) (position 13), the base station 3 notifies the control station 5 that the transmitted power becomes lowered. When the control station 5 receives the notification, the control station 5 terminates the acquisition of positional information of the user equipment 1.

Next, detection of the upstream stable-unstable area border 20 will be described. Acquisition opportunity of positional information is substantially the same as the method of the downstream described above. When the user equipment 1 starts to use power that is power (Pu-β) or more, which is obtained by subtracting a margin value β from the maximum transmitted power Pu (position 11), the user equipment 1 notifies the control station 5 via the base station 3 that the transmitted power of the user equipment 1 is near the limit. The control station 5 that received the notification starts acquisition of positional information of the targeted user equipment 1 via the base station 3.

The positional information is temporarily stored in the control station 5 or the information management station as a sample of the upstream stable-unstable area border information together with the used communication service and communication rate information. After the acquired information is subjected to statistical processing in the control station 5 or the information management station, it is stored as border information indicating the upstream stable-unstable area border 20.

When the transmitted power becomes less than (Pu-β) (position 14), the user equipment 1 notifies the control station 5 via the base station 3 that the transmitted power becomes lowered. The control station 5 that received the notification terminates the acquisition of positional information of the targeted user equipment 1.

As described above, by obtaining the stable-unstable area border information together with the communication service and communication rate information, the stable-unstable area borders 10, 20 can be grasped. This makes it possible to carry out cell design and cell arrangement effectively.

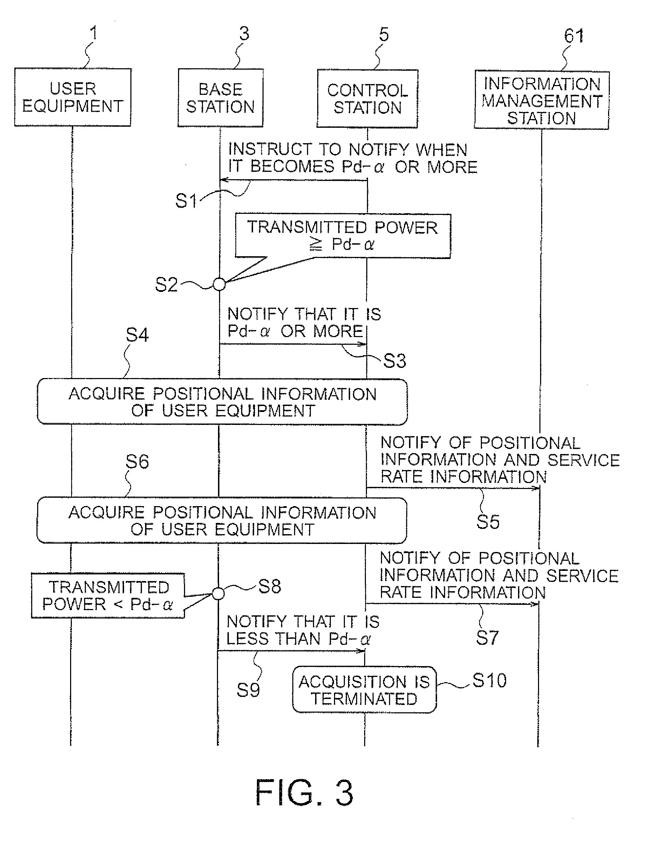

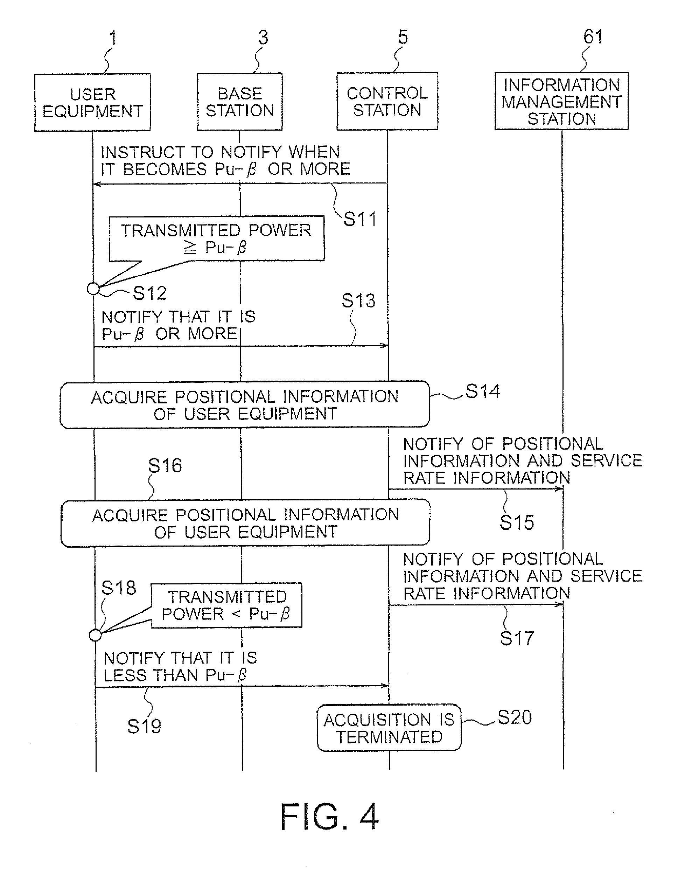

Hereinafter, an operation of the embodiment of the present invention will be described in detail with reference to Figs. 2, 3 and 4. Fig. 3 is a sequence diagram of the case where border information of the downstream stable-unstable area border 10 is acquired to be stored at the information management station. Fig. 4 is a sequence diagram of the case where border information of the upstream stable-unstable area border 20 is acquired to be stored at the information management station.

In Fig. 2, the user equipment 1 detects at the position 11 of the first black circle that (upstream) transmitted power of the user equipment 1 becomes Pd-α or more, and reports it to the control station 5. The control station 5 that received the report acquires positional information of the user equipment 1 at the time. Moreover, since the transmitted power of the user equipment 1 exceeds Pd-α even at the position of each black circle between the position 11 of this black circle and the position 14 of the black circle, the user equipment 1 does not notify the control station 5 that it becomes less than Pd-α. The control station 5 that has not received the notification indicating that it becomes less than Pd-α acquires positional information of the user equipment 1.

When the user equipment 1 moves along the broken line 100 and comes to a first white circle position 12, the base station 3 detects that the downstream transmitted power exceeds Pd-α, and thus reports it to the control station 5. Since the control station 5 receives the report from the base station 3, acquisition of positional information of the user equipment 1 is started. Since the control station 5 is not reported that "it becomes less than Pd-α" from the base station 3 when to comes to a position of a second white circle, the control station 5 continues the acquisition of positional information of the user equipment 1.

Referring to Fig. 3, a series of sequences for acquiring positional information relating to the downstream stable-unstable area border 10 is shown. The control station 5 instructs the base station 3 to measure transmitted power so that the control station 5 is notified of that effect when transmitted power of the base station 3 becomes Pd-α or more (Step S1). The base station 3 that received the instruction starts to monitor transmitted power. When the base station 3 detects that the transmitted power becomes Pd-α or more (Step S2), the base station 3 notifies the control station 5 of that effect (Step S3).

The control station 5 that received the notification starts acquisition of positional information of the targeted user equipment 1 (Step S4). When the acquisition of positional information is complected, the control station 5 notifies it to the information management station together with the service and rate information of the targeted user equipment 1 (Step S5). When second acquisition opportunity of positional information comes a little while after the first acquisition of positional information (Steps S4, S5), it is not notified of the matter "it becomes less than Pd-α" by the base station 3. For that reason, the control station 5 carries out the second acquisition of positional information (Step S6). Since it is notified of the matter "it becomes less than Pd-α" by the base station 3 from the time when the second positional information is acquired (Steps S6, S7) to third acquisition opportunity (Steps S8, S9), the control station 5 terminates the acquisition of positional information (Step S10).

Referring to Fig. 4, a series of sequences for acquiring positional information relating to the upstream stable-unstable area border 20 is shown. Similar to the case of the downstream, the control station 5 instructs the user equipment 1 to measure transmitted power so that the control station 5 is notified of it when the transmitted power becomes Pu-β or more (Step S11). The user equipment 1 that received the instruction starts to monitor the transmitted power. When the user equipment 1 detects that the transmitted power becomes Pu-β or more (Step S12), the control station 5 is notified of that effect (Step S13).

The control station 5 that received the notification acquires positional information of the user equipment 1 that transmitted the notification (Step S14). When acquisition of the positional information is completed, the control station notifies the information management station of it together with the service and rate information of the targeted user equipment 1 (Step S15). When the second acquisition opportunity of positional information comes a little while after the first acquisition of positional information (Steps S14, S15), it is not notified of the matter "it becomes less than Pu-β" by the user equipment 1. For that reason, the control station 5 carries out second acquisition of positional information (Steps S16, S17).

Since it is notified of the matter "it becomes less than Pu-β" (Step S18) by the base station 3 from the time when the second positional information is acquired to the third acquisition opportunity (Step S19), the control station 5 terminates the acquisition of positional information (Step S20).

As another embodiment of the present invention, acquisition of information on a high interference area is also possible in addition to the stable-unstable area border information. The user equipment can measure interference intensity of a place at which the user equipment is positioned. Therefore, by notifying the control station of that effect when the interference intensity is a constant value or more, acquisition of information on a high interference area becomes possible.

As still another embodiment of the present invention, the user equipment can be caused to carry out all of measurement. The user equipment can measure the received power. The control station specifies a measuring object in the user equipment to a common channel (CPICH: Common Pilot Channel, and the like) transmitted with constant power from the base station. In the wake that received power of the common channel becomes a constant value or less, the user equipment is caused to report that effect, and the control station may acquire positional information of the user equipment in the wake of the notification. Since the common channel (CPICH and the like) is transmitted with constant power, a region in which received power of the user equipment becomes a constant value or less can be presumed to be a downstream unstable area.

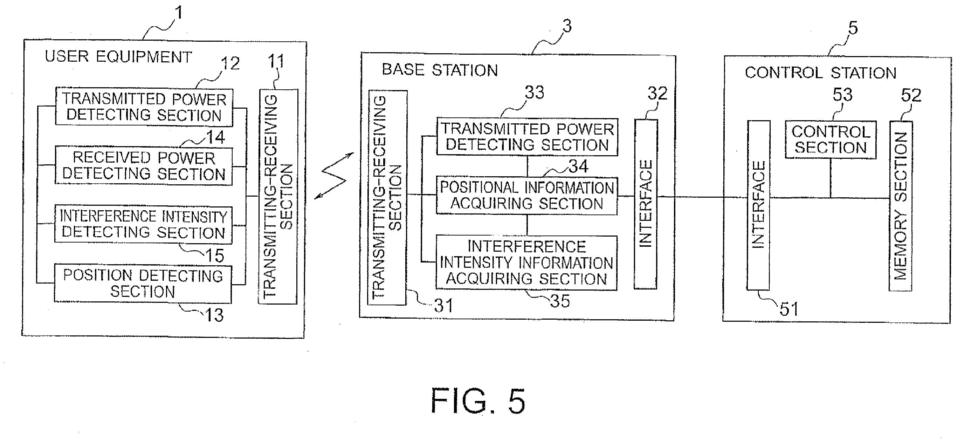

In order to achieve the operation as described above, the user equipment 1, the base station 3 and the control station 5 may include configurations as shown in Fig. 5.

The user equipment 1 may include a transmitted power detecting section 12, a position detecting section 13, a received power detecting section 14 and an interference intensity detecting section 15 in addition to a transmitting-receiving section 11 for wireless communication with the base station 3. The transmitted power detecting section 12 may be configured to detect transmitted power and to notify the base station 3 or the control station 5 that the detected transmitted power becomes a predetermined value or more, or that the detected transmitted power becomes less than the predetermined value. Similarly, the received power detecting section 14 may be configured to detect received power and to notify the base station 3 or the control station 5 that the detected received power becomes a predetermined value or more, or that the detected received power becomes less than the predetermined value. Further, the position detecting section 13 may be configured to carry out position detection when the transmitted power or the received power becomes the predetermined value or more (or the predetermined value or less), and to notify the base station 3 or the control station 5 of it. The interference intensity detecting section 15 may be configured to detect interference intensity when interference intensity becomes a predetermined value or more (or the predetermined value or less), and to notify the base station 3 or the control station 5 of it.

The base station 3 may include a transmitted power detecting section 33, a positional information acquiring section 34 and an interference intensity information acquiring section 35 in addition to a transmitting-receiving section 31 for wireless communication with the user equipment 1 and an interface 32 for communication with the control station 5. The transmitted power detecting section 33 may be configured to detect transmitted power and to notify the control station 5 that the detected transmitted power becomes a predetermined value or more, or that the detected transmitted power becomes less than the predetermined value. The positional information acquiring section 34 may be configured to acquire positional information of the user equipment 1 from the time when the transmitted power becomes the predetermined value or more to the time when the transmitted power becomes less than the predetermined value, and to notify the control station 5 of it. The interference intensity information acquiring section 35 may be configured to acquire interference intensity information from the user equipment 1 and to notify the control station 5 of it.

The control station 5 may include an interface 51, a memory section 52 and a control section 53 for communication with the base station 3. information required for control and acquired information may be stored in the memory section. The control section 53 may function as means for controlling the base station 3 to acquire positional information (and transmitted power information) from the user equipment 1 via the base station 3 and for acquiring upstream and downstream stable-unstable area borders on the basis of acquired positional information and transmitted power of the base station or the user equipment. Further, the control section 53 may function as means for acquiring positional information and interference intensity information from the user equipment 1 via the base station 3 and for obtaining a high interference area on the basis of the acquired positional information and the interference intensity information.

## Claims

1. A communication area detecting system, comprising:
first means for acquiring a downstream stable-unstable area border in accordance with transmitted power from a base station to user equipment; and
second means for acquiring an upstream stable-unstable area border in accordance with transmitted power of the user equipment.

2. The communication area detecting system as claimed in claim 1, wherein the first means and the second means respectively acquire the downstream and upstream stable-unstable area borders in accordance with first and second predetermined transmitted power corresponding to a class of communication service and a communication rate of the user equipment.

3. The communication area detecting system as claimed in claim 2, wherein the first means is configured to acquire positional information of the user equipment from the time when the transmitted power from the base station to the user equipment becomes the first predetermined transmitted power or more to the time when the transmitted power becomes less than the first predetermined transmitted power, and
wherein the second means is configured to acquire positional information of the user equipment from the time when the transmitted power of the user equipment becomes the second predetermined transmitted power or more to the time when the transmitted power becomes less than the second predetermined transmitted power.

4. The communication area detecting system as claimed in any one of claims 1 to 3, wherein the first means and the second means are included in a wireless control station.

5. The communication area detecting system as claimed in any one of claims 1 to 3, further comprising:
third means for acquiring interference intensity information in the user equipment.

6. A communication area detecting system, comprising:
first means for acquiring a downstream stable-unstable area border in accordance with received power in user equipment of a channel in which it is transmitted from a base station with constant power; and
second means for acquiring an upstream stable-unstable area border in accordance with transmitted power of the user equipment.

7. The communication area detecting system as claimed in claim 6, wherein the first means is adapted to acquire positional information of the user equipment when the received power becomes a predetermined value or less.

8. A method of detecting a communication area, the method comprising:
a first step of acquiring a downstream stable-unstable area border in accordance with transmitted power from a base station to user equipment; and
a second step of acquiring an upstream stable-unstable area border in accordance with transmitted power of the user equipment.

9. The method as claimed in claim 8, wherein the first and second steps respectively include acquiring the downstream and upstream stable-unstable area borders in accordance with first and second predetermined transmitted power corresponding to a class of communication service and a communication rate of the user equipment.

10. The method as claimed in claim 9, wherein the first step includes acquiring positional information of the user equipment from the time when the transmitted power from the base station to the user equipment becomes the first predetermined transmitted power or more to the time when the transmitted power becomes less than the first predetermined transmitted power, and
wherein the second step includes acquiring positional information of the user equipment from the time when the transmitted power of the user equipment becomes the second predetermined transmitted power or more to the time when the transmitted power becomes less than the second predetermined transmitted power.

11. The method as claimed in any one of claims 8 to 10, wherein the first and second steps are carried out in a wireless control station.

12. The method as claimed in any one of claims 8 to 10, further comprising:
a third step of acquiring interference intensity information in the user equipment.

13. A method of detecting a communication area, the method comprising:
a first step of acquiring a downstream stable-unstable area border in accordance with received power in user equipment of a channel in which it is transmitted from a base station with constant power; and
a second step of acquiring an upstream stable-unstable area border in accordance with transmitted power of the user equipment.

14. The method as claimed in claim 13, wherein the first step is adapted to acquire positional information of the user equipment when the received power becomes a predetermined value or less.

15. A base station in an area detecting system, in which a downstream stable-unstable area border is acquired in accordance with transmitted power from the base station to user equipment, the base station comprising:
means for notifying a wireless control station of that effect when the transmitted power becomes a predetermined value or more or when the transmitted power becomes less than the predetermined value.

16. The base station as claimed in claim 15, wherein the predetermined value is defined in accordance with a class of communication service and a communication rate of the user equipment.

17. The base station as claimed in claim 15 or 16, further comprising:
means for acquiring positional information of the user equipment from the time when the transmitted power to the user equipment becomes the predetermined transmitted power or more to the time when the transmitted power becomes less than the predetermined transmitted power.

18. The base station as claimed in any one of claims 15 to 17, further comprising:
means for acquiring interference intensity information of the user equipment.

19. User equipment in an area detecting system, in which an upstream stable-unstable area border is acquired in accordance with transmitted power of the user equipment, the user equipment comprising:
means for notifying a wireless control station of that effect when the transmitted power becomes a predetermined value or more or when the transmitted power becomes less than the predetermined value.

20. The user equipment as claimed in claim 19, wherein the predetermined value is defined in accordance with a class of communication service and a communication rate.

21. The user equipment as claimed in any one of claims 19 to 21, further comprising:
means for notifying the wireless control station of positional information from the time when the transmitted power becomes the predetermined value or more or when the transmitted power becomes less than the predetermined value.

22. User equipment in an area detecting system, in which an upstream stable-unstable area border in a mobile communication system is acquired, the user equipment comprising:
first means for notifying a wireless control station of positional information when received power of a channel in which it is transmitted from a base station with constant power becomes a predetermined value or less; and
second means for notifying the wireless control station of that effect when transmitted power to the base station becomes a predetermined value or more or when the transmitted power becomes less than the predetermined value.
